## Europäisches Patentamt
## European Patent Office
## Office européen des brevets

(19)

(11) Veröffentlichungsnummer: **0 022 989**
**A1**

(12) # EUROPÄISCHE PATENTANMELDUNG

(21) Anmeldenummer: **80103979.3**

(22) Anmeldetag: **10.07.80**

(51) Int. Cl.³: **B 02 C 9/04**

(30) Priorität: **12.07.79 DE 2928250**

(43) Veröffentlichungstag der Anmeldung:
**28.01.81 Patentblatt 81/4**

(84) Benannte Vertragsstaaten:
**CH FR GB IT LI SE**

(71) Anmelder: **Palyi, Leslie**
**55 Misty Crescent**
**Don Mills, Ontario M3B 1T2(CA)**

(71) Anmelder: **Sheth, Jawahar**
**1227 Fairdale Dr.**
**Mississauga Ontario L5C IK3(CA)**

(72) Erfinder: **Palyi, Leslie**
**55 Misty Crescent**
**Don Mills, Ontario M3B 1T2(CA)**

(72) Erfinder: **Sheth, Jawahar**
**1227 Fairdale Dr.**
**Mississauga Ontario L5C IK3(CA)**

(74) Vertreter: **Wallach, Curt, Dipl.-Ing. et al,**
**Patentanwalte Dipl.-Ing. Curt Wallach Dipl.-Ing. Gunther**
**Koch, Dipl.-Phys. Dr. Tino Haibach, Dipl.-Ing. R.**
**Feldkamp Postfach 920**
**D-8000 München 33(DE)**

(54) **Verfahren und Anlage zur Herstellung von Mehl, insbesondere Weizenmehl zum Brotbacken.**

(57) Verfahren zum Herstellen von Mehl, bei welchem das Getreide in angefeuchteter Form einem Schälvorgang unterworfen, anschließend weiterbefeuchtet und dann feucht zu Mehl vermahlen wird, wobei nach der Abreinigung das Getreide auf einen Feuchtigkeitsgehalt zwischen 13 und 18 ‰ gebracht wird, und dieses angefeuchtete Getreide kurzzeitig (ca. 20 mis 30 Minuten) einem Tempervorgang unterworfen wird.

Anlage zur Durchführung des Verfahrens bei der einem Windsichter (2) eine Befeuchtungsvorrichtung (4) nachgeschaltet ist, deren Ausgang über einen Schraubenförderer (5) an Tempergefäße (6) angeschlossen ist, deren Ausgang an eine Schälmaschine (9) anschließt, wobei der Schälmaschine (9) eine Befeuchtungsvorrichtung (10) nachgeschaltet ist, die in eine Naßmahlvorrichtung (11) fördert, der wiederum eine Schraubenmühle (12) nachgeschaltet ist, welche in einen Teigmischer (13) mündet.

./...

Croydon Printing Company Ltd.

– 1 –

Verfahren und Anlage zur Herstellung von Mehl, insbesondere
Weizenmehl zum Brotbacken.

Die Erfindung betrifft ein Verfahren und eine Anlage zur
Herstellung von Mehl zum Brotbacken. Insbesondere betrifft
die Erfindung die Verarbeitung von Weizen oder Roggen, jedoch
kann auch Gerste und anderes Getreide auf diese Weise verarbeitet werden.

Als Ausgangsprodukt für die Brotherstellung wird seit alters
her Mehl benutzt, das durch Trockenvermahlung von Getreide
hergestellt wurde. Dieses Mehl erfordert eine sorgfältige
Aufbewahrung und darf weder extremen Temperaturbedingungen
noch extremen Feuchtigkeitsbedingungen ausgesetzt werden.
Auch bei sachgemäßer Lagerung ist es jedoch nur begrenzt
haltbar.

Der Erfindung liegt die allgemeine Aufgabe zugrunde, ein
Verfahren zur Erzeugung eines völlig neuartigen und hinsichtlich des Gehaltes an Nährstoffen und Zusatzstoffen
verbessertes Brot zu schaffen, welches aus einem Ausgangsprodukt gewonnen werden kann, das wesentlich länger als bisher üblich lagerfähig ist.

Gelöst wird die gestellte Aufgabe dadurch, daß das Getreide
in angefeuchteter Form einem Schälvorgang unterworfen, anschließend weiterbefeuchtet und dann feucht zu Mehl vermahlen wird. Auf diese Weise wird zunächst ein teigartiges Produkt gewonnen, welches unmittelbar verarbeitet werden kann. Gelöst wird die gestellte Aufgabe der Erlangung eines lagerfähigen Zwischenprodukts dadurch, daß das Getreide in angefeuchteter Form einem Schälvorgang unterworfen, anschließend weiterbefeuchtet und dann feucht zu Mehl vermahlen wird, und daß das naßvermahlene in Teigform gebrachte Zwischenprodukt ausgewalzt und in kleine Stücke verschnitten und anschließend getrocknet wird, und daß die getrockneten Stücke fein vermahlen werden.

Zur Herstellung des lagerfähigen Mehls wird der Teig demgemäß ähnlich wie bei der Nudelherstellung bearbeitet und aus den gemahlenen zerkleinerten nudelartigen Teigabschnitten wird durch Vermahlung das Mehl gewonnen, welches als Ausgangsprodukt für die Herstellung von Brot verschiedenster Art dienen kann. Dieses Ausgangsprodukt ist ein fertiggemischtes Brotmehl, aus dem ein völlig neuartiges Weizenbrot geschaffen werden kann, das qualitativ hochwertig ist und sehr nahrhaft ist, und damit konventionellen Weizenprodukten, die heute auf dem Markt sind, beträchtlich überlegen ist. Dieses Zwischenprodukt kann sowohl im Haushalt verwendet werden, aber es kann auch in Brotfabriken oder Bäckereien Anwendung finden. Es ist lagerfähig sowohl bei tropischen Umgebungsverhältnissen als auch unter Umgebung mit tiefen Temperaturen. Es ist weder ein Einfrieren des Produktes noch eine spezielle Lagerung erforderlich, und es genügt ein dichter Behälter, beispielsweise ein Plastikbeutel.

Das Endprodukt ist auch für Diabetiker zu empfehlen und kann wie Grahambrot verarbeitet werden. Im Hinblick auf diese seine Eigenschaften und den hohen Nährwert ist die Erfindung insbesondere auch anwendbar für unterentwickelte Länder zur zusätzlichen Ernährung.

- 3 -

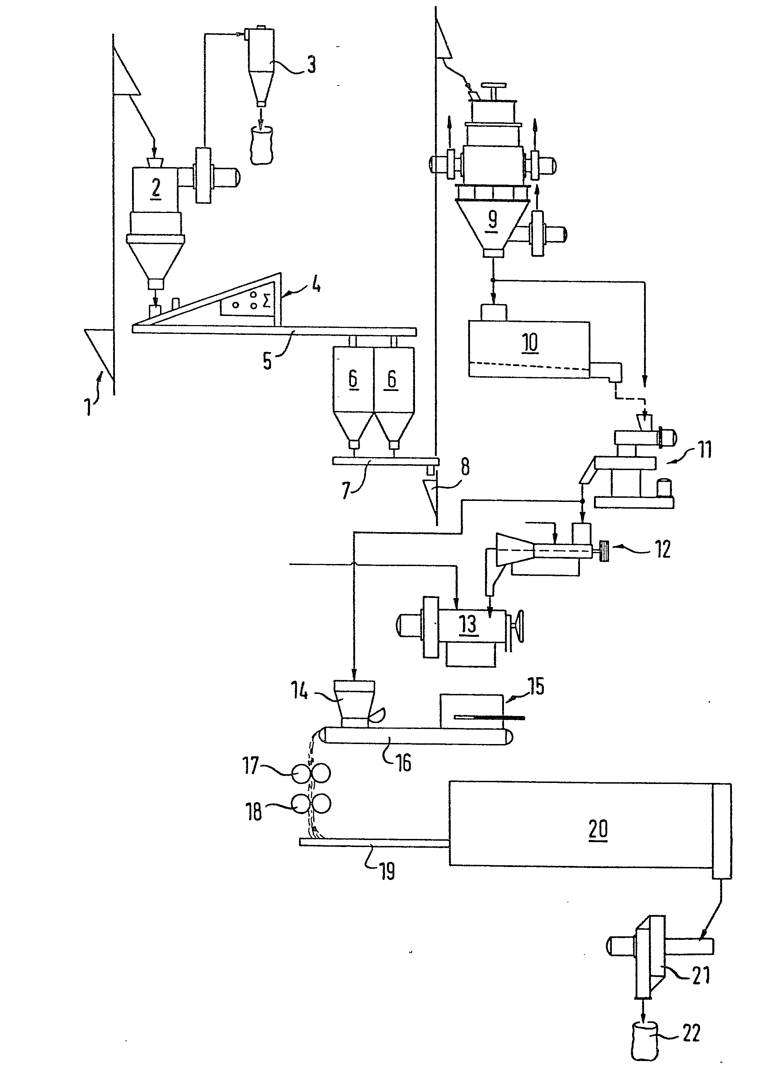

Nachstehend wird ein Ausführungsbeispiel der Erfindung anhand der Zeichnung beschrieben. Die einzige Figur der Zeichnung zeigt eine schematische Darstellung der Anlage zur Herstellung von neuartigem Weizenbrot.

Über einen Kübelaufzug 1 wird vorgereinigter Weizen über einen Aufgabetrichter einem Windsichter 2 zugeführt, um Staub und leichte Partikel von den Getreidekörnern zu entfernen. Diese leichten Partikel werden dem Zyklonabschneider 3 zugeführt. Das im Windsichter 2 gereinigte Gut wird dann einer Befeuchtungsvorrichtung 4 zugeführt, um sämtliche Körner auf einen gleichen Feuchtigkeitsgehalt zu bringen, der vorzugsweise 13 bis 18% beträgt. Von dort gelangt das Getreide in einen Schraubenförderer 5, in dem eine Vermischung stattfindet. Aus dem Schraubenförderer 5 gelangt das Gut in zwei Tempergefäße 6, in denen das Gut 20 bis 30 Minuten auf einem Rost verbleibt. Dann wird das Gut von den Gefäßen 6 über eine Fördervorrichtung 7, einem Aufzug 8 zugeführt, der das Gut einer Schälmaschine 9 zuführt. Diese Schälmaschine ist insbesondere entsprechend den Lehren der DE-OS 28 34 133.5 bzw. 29 21 982.7 ausgebildet. Nach dem Abschälvorgang werden die Körner in einem Befeuchtungsbehälter 10 auf einen Feuchtigkeitsgehalt zwischen 25% und 55% gebracht, und dann werden die so befeuchteten Getreidekörner in diesem Behälter 8 bis 12 Stunden lang belassen, und während dieser Zeit findet eine biologische Umwandlung infolge des einsetzenden Keimvorganges statt, denn die unbeschädigten Kernpartikel beginnen zu keimen.

Der befeuchtete Weizen mit einem Feuchtigkeitsgehalt bis zu 55% wird dann über einen Schraubenförderer einer Naßmahlvorrichtung gleichmäßig zugeführt. Diese Mahlvorrichtung 11 ist insbesondere von der Bauart wie sie in der DE-OS 27 11 097 beschrieben ist. Hierdurch wird ein Zwischenprodukt in Form eines Weizenschrotes geschaffen, in dieser Vorrichtung 11

- 4 -

wird weiterhin der Weizenschrot zu einem pastenförmigen Teig verarbeitet, ohne daß die Keimabschnitte oder die Kernmasse beschädigt wird. Um eine Beschädigung zu verhindern, wird Sorge dafür getragen, daß die Temperatur nicht über etwa 32°C erhöht wird. Das pastenförmige feuchte Teigprodukt wird dann ein zweites Mal einem Mahlvorgang in einer Schraubenmahlvorrichtung 12, wodurch die Partikelgrößen im Teig vergleichmäßigt werden, ohne daß die Keime beschädigt werden. Das Produkt wird dann in feuchtem Zustand einer Teigmischvorrichtung 13 zugeführt, die eine Maschengröße von 10 XX besitzt. Die Temperatur wird dabei durch Wasserkühlung konstant gehalten, damit die Keime nicht beschädigt werden. Dies ist das Ende des feuchten Verfahrensganges und von hier kann das Produkt in verschiedener Weise weiterverarbeitet werden, nämlich:

1. kann das Produkt als Teig in herkömmlicher Weise weiterverarbeitet und gebacken werden, wobei Hefe, Salz oder andere Bestandteile hinzugefügt werden können, je nachdem was der Markt erfordert und das Verbacken kann in herkömmlicher Weise erfolgen.

2. Kann der Teig, wenn eine sofortige Bearbeitung nicht erforderlich ist, weiterverarbeitet werden, um es lagerfähig zu machen. Dazu wird dem Teigprodukt Hefe, Salz und gegebenenfalls andere Bestandteile in der Teigmischvorrichtung 13 zugeführt, und dann wird der Teig über einen speziellen Extruder zu einem Pastenprodukt ausgerollt, und zwar in einer Stärke von etwa 3,2 mm. Dabei wird das Einsetzen einer Enzymwirkung verhindert.

Dann wird das Produkt in kurze Stücke geschnitten und mit herkömmlichen Verfahren bei niedriger Temperatur (nicht über 36°C getrocknet, wodurch der Feuchtigkeitsgehalt der Paste auf maximal 10 bis 11% gebracht wird. Zu diesem Zweck wird

- 5 -

der aus der Teigmaschine 13 gewonnene Teig einer Ausroll- und Schneidvorrichtung 15 zugeführt, wo der Teig ähnlich wie bei der Nudelherstellung verarbeitet wird. Von hier gelangt das Produkt über das Förderband 16 zu einer Zuführungsvorrichtung 14, über die Mehl direkt zugeführt wird, das von der Vorrichtung 11 geliefert wurde. Das so behandelte Produkt wird dann über Walzenschneidvorrichtungen 17 und 18 in kleinere Stücke aufgeteilt, die über ein Förderband 19 einer Trockentrommel 20 zugeführt werden. In dieser erfolgt die Trocknung bei Temperaturen unter 36°C, wodurch der Feuchtigkeitsgehalt auf 10 bis 11% erniedrigt wird. Nach Trocknung des Produktes werden die geschnittenen Teilchen über einen Schraubenförderer einer Mahlvorrichtung 21 zugeführt, aus der das Endprodukt in Mehlform in Säcken 22 abgefüllt werden kann. In der Mahlvorrichtung 21 wird ein Mehl mit einer Teilchengröße hergestellt, die einem 8 XX Maschensieb entspricht (180 bis 200 Linien pro Zoll). Dieses Endprodukt, bestehend aus fertig gemischtem Mehl, kann zum Backen im Haushalt benutzt werden, oder auch in Bäckereien oder Brotfabriken, wobei die verschiedensten bekannten Techniken Anwendung finden können. Aus dem Mehl kann in üblicher Weise durch Zusatz von Wasser der Teig wiedergewonnen werden, wobei es lediglich notwendig ist, daß der Teig etwa 45 bis 60 Minuten bei einer Temperatur von 34 bis 35°C gehalten wird. Anschließend kann das Backen in jeder bekannten Form im Haushalt oder Gewerbebetrieb erfolgen.

Dem in der vorbeschriebenen Weise hergestellten Mehl kann vor der Rekonstitution und dem Zusatz von Wasser und der zweiten Aktivierung anderes Mehl mit hohem Proteingehalt oder Roggenmehl oder anderes Weizenmehl zusammen mit Hefe zugesetzt werden und die Mischung kann dann zusammen in der Mahlvorrichtung 20 gemahlen werden. Auch ein solches Mehlendprodukt besitzt eine lange Lagerfähigkeit und kann als Fertigmischmehl für Brot und Kekse benutzt werden und hat ein ausgezeichnetes Aroma und eine gute Struktur. Das Produkt wird während der Lagerung auch nicht modrig. Dieses so hergestellte Mehl hat eine Lagerfähigkeit von über einem Jahr, wenn es in luftdichten Behältern, beispielsweise einem Plastikbeutel, verpackt wird und das Mehl ist auch in bester Weise geeignet für Diabetiker.

Außerdem hat das Fertigprodukt den Vorteil für den Verbraucher, daß es unter allen klimatischen Bedingungen benutzt werden kann und sowohl bei arktischen Temperaturen als auch bei tropischen Temperaturen verarbeitungsfähig ist, ohne eine kostspielige Lagerung zu erfordern, um bakterielle Angriffe zu vermeiden.

Das Produkt ist in erster Linie für den Hausgebrauch gedacht, um frisches Vollkornbrot herzustellen. Es kann natürlich aber auch industriell verwertet werden.

Patentansprüche

1. Verfahren zum Herstellen von Mehl, bei welchem die gereinigten Getreidekörner auf die gewünschte Teilchengröße vermahlen werden, dadurch gekennzeichnet, daß das Getreide in angefeuchteter Form einem Schälvorgang unterworfen, anschließend weiterbefeuchtet und dann feucht zu Mehl vermahlen wird.

2. Verfahren nach Anspruch 1, dadurch gekennzeichnet, daß nach der Abreinigung das Getreide auf einen Feuchtigkeitsgehalt zwischen 13 und 18% gebracht wird, und daß dieses angefeuchtete Getreide kurzzeitig (ca. 20 bis 30 Minuten) einem Tempervorgang unterworfen wird.

3. Verfahren nach Anspruch 1, dadurch gekennzeichnet, daß das im feuchten Zustand geschälte Getreide einer weiteren Befeuchtung bis zu einem Feuchtigkeitsgehalt von 55% unterworfen wird, bevor der Naßmahlvorgang einsetzt.

4. Verfahren nach den Ansprüchen 1 bis 3, dadurch gekennzeichnet, daß vor der Feuchtvermahlung ein Absetzen des auf 25 bis 55° befeuchteten Getreides während einer Zeitdauer von 8 bis 12 Stunden erfolgt.

5. Verfahren nach einem der Ansprüche 1 bis 4, dadurch gekennzeichnet, daß während der Feuchtvermahlung die Temperatur auf unter 32°C gehalten wird.

6. Verfahren nach einem der Ansprüche 1 bis 5, zur Erzeugung eines Vollkornbrotes, dadurch gekennzeichnet, daß das naßvermahlene Getreide in Teigform durch Zusatz von Wasser gebracht und anschließend verbacken wird.

7. Verfahren nach einem der Ansprüche 1 bis 5, zum Herstellen einer lagerfähigen Mehles, dadurch gekennzeichnet, daß das

- 8 -

naßvermahlene in Teigform gebrachte Zwischenprodukt ausgewalzt und in kleine Stückeverschnitten und anschließend getrocknet wird, und daß die getrockneten Stücke fein vermahlen werden.

8. Verfahren nach Anspruch 7, zum Brotbacken, dadurch gekennzeichnet, daß das lagerfähige Mehl mit Wasser zu einem Teig
vermischt wird, der 45 bis 60 Minuten bei einer Temperatur
von 34 bis 35°C stehen gelassen wird, bevor der herkömmliche
Backvorgang einsetzt.

9. Anlage zur Durchführung des Verfahrens nach den Ansprüchen
1 bis 8, dadurch gekennzeichnet, daß einem Windsichter (2)
eine Befeuchtungsvorrichtung (4) nachgeschaltet ist, deren
Ausgang über einen Schraubenförderer (5) an Tempergefäße
(6) angeschlossen ist, deren Ausgang an eine Schälmaschine
(9) anschließt, wobei der Schälmaschine (9) eine Befeuchtungsvorrichtung (10) nachgeschaltet ist, die in eine Naßmahlvorrichtung (11) fördert, der wiederum eine Schraubenmühle
(12) nachgeschaltet ist, welche in einen Teigmischer (13)
mündet.

10. Anlage nach Anspruch 9, dadurch gekennzeichnet, daß dem Teigmischer eine Ausrollstation (15) und eine Teigzerkleinerungsstation (17, 18) nachgeschaltet ist, von wo aus ein Förderband (19) in eine Trockenvorrichtung (20) führt, aus der ein
Schraubenförderer nach einer Mahlvorrichtung (21) führt und
daß das der Teigauswalzstation (15) nachgeschaltete Förderband eine Zuführungsvorrichtung (14) für fertiges Mehl oder
dgl. aufweist.

## Europäisches Patentamt

# EUROPÄISCHER RECHERCHENBERICHT

Nummer der Anmeldung
EP 80 10 3979

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| | US - A - 1 751 032 (DIENST) <br> * Seite 3, Zeilen 12-32, 44-54 * | 1,3,9 | B 02 C 9/04 |
| | US - A - 2 527 585 (SLOTTER) <br> * Spalte 4, Zeilen 37-42 * | 1,3 | |
| | GB - A - 920 554 (ISHIKAWA) <br> * Seite 3, Zeilen 65-79 * | 1,3 | RECHERCHIERTE SACHGEBIETE (Int. Cl.³) |
| | US - A - 2 584 893 (LLOYD) <br> * Spalte 5, Zeilen 22-42 * | 1,3 | B 02 C <br> B 02 B |
| | GB - A - 1 258 230 (MILLIAT) <br> * Seite 5, Zeilen 23-29, 41-45 * | 1,2 | |
| | US - A - 2 413 472 (SULLIVAN) <br> * Spalte 7, Zeilen 4-14 * | 1 | |
| | US - A - 1 334 366 (GARZA) <br> * Seite 1, Zeilen 83-96 * | 1,4,7 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur |
| | US - A - 4 038 433 (MANSER) <br> * Spalte 23, Zeilen 15-27, 30-34 * | 7,10 | T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 16-10-1980 | VERDONCK |

EPA form 1503.1  06.78